(19) Europäisches Patentamt
European Patent Office
Office européen des brevets

(11) **EP 3 123 822 B1**

(12) **EUROPÄISCHE PATENTSCHRIFT**

(45) Veröffentlichungstag und Bekanntmachung des Hinweises auf die Patenterteilung:
16.06.2021 Patentblatt 2021/24

(21) Anmeldenummer: **15709446.7**

(22) Anmeldetag: **02.03.2015**

(51) Int Cl.:
*H05B 45/395* (2020.01)       *H05B 45/3725* (2020.01)
*H05B 45/355* (2020.01)       *H05B 45/345* (2020.01)
*H05B 45/347* (2020.01)       *H02M 7/217* (2006.01)
*H02M 1/00* (2006.01)         *H02M 1/42* (2007.01)
*H02M 7/06* (2006.01)         *H02M 1/34* (2007.01)
*H02M 1/12* (2006.01)

(86) Internationale Anmeldenummer:
**PCT/EP2015/054280**

(87) Internationale Veröffentlichungsnummer:
**WO 2015/144394 (01.10.2015 Gazette 2015/39)**

(54) **SCHALTUNGSANORDNUNG UND VERFAHREN ZUM BETREIBEN VON HALBLEITERLICHTQUELLEN**

CIRCUIT ARRANGEMENT AND METHOD FOR OPERATING SEMICONDUCTOR LIGHT SOURCES

CIRCUITERIE ET PROCÉDÉ POUR FAIRE FONCTIONNER DES SOURCES LUMINEUSES À SEMI-CONDUCTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2014 DE 102014205469**
**15.09.2014 DE 102014218422**

(43) Veröffentlichungstag der Anmeldung:
**01.02.2017 Patentblatt 2017/05**

(73) Patentinhaber: **OSRAM GmbH**
**80807 München (DE)**

(72) Erfinder: **SCHMITT, Harald**
**80689 München (DE)**

(74) Vertreter: **OSRAM GmbH - GC IP**
**Marcel-Breuer-Straße 6**
**80807 München (DE)**

(56) Entgegenhaltungen:
**EP-A1- 2 315 497       WO-A1-2013/160462**
**CN-A- 103 648 204       US-A1- 2012 081 016**

## Beschreibung

### Technisches Gebiet

Die Erfindung geht aus von einer Schaltungsanordnung und einem Verfahren zum Betreiben einer Last, aufweisend einen Eingang zum Eingeben einer Netzeingangswechselspannung, eine Stromrichterschaltung, eine Wandlerschaltung, die die Netzeingangswechselspannung in eine Ausgangsspannung wandelt, eine Steuerschaltung zum Steuern der Wandlerschaltung, und eine lineare Regelschaltung, die einen vorbestimmten Laststrom an der Last einstellt, wobei der Laststrom ein Gleichstrom ist.

### Hintergrund

Die Erfindung geht aus von einer Schaltungsanordnung zum Betreiben von Halbleiterlichtquellen nach der Gattung des Hauptanspruchs.

Aus der WO 2013/160 462 A1 ist eine Schaltungsanordnung zum Betreiben von LEDs bekannt, welche bei sehr niedriger Netzspannung ein Spannungsminimum der Zwischenkreisspannung im Minimum der Eingangsspannung aufweist. Diese Modulation wird von einem Linearregler ausgeglichen, so dass die LEDs mit einem möglichst gleichförmigen Strom mit vernachlässigbarer Strommodulation betrieben werden. Aus der EP 2315497 A1 ist eine Treiberschaltung für LEDs bekannt, die eine steuerbare Leistungsfaktorkorrekturschaltung, einen Linearregler und eine Headroom-Steuerkomponente umfasst. Aus der CN103648204 A ist eine Treiberschaltung für LEDs bekannt, die auf einem Aufwärtswandler, einem Linearregler und einem Spannungsdetektor zur Erkennung von Minima in der Betriebsspannung der LEDs basiert. Aus der US 2012081016 A1 ist schließlich eine Treiberschaltung für LEDs bekannt, die einen getakteten Wandler, mehrerer Linearregler und eine Schaltung zur dynamischen Headroomsteuerung umfasst.

Es sind also verschiedene Schaltungstopologien für Konverter bekannt, um aus einer Netzwechselspannung einen für Halbleiterlichtquellen wie Leuchtdioden geeigneten Strom zu erzeugen. Üblicherweise sind die Konverter zweistufig aufgebaut. Eine erste Stufe arbeitet als Leistungsfaktorkorrektur um eine in vielen Ländern vorgeschriebene sinusförmige Netzstromaufnahme zu bewerkstelligen. Diese erste Stufe erzeugt eine konstante Ausgangsspannung, die oft als Zwischenkreisspannung bezeichnet wird. Diese Stufe ist oftmals als Hochsetzsteller ausgeführt. Ausgehend von dieser Ausgangsspannung erzeugt die zweite Stufe einen für die Halbleiterlichtquellen geeigneten Strom. Dafür wird als Schaltungstopologie oftmals ein Tiefsetzsteller verwendet. Durch die Wahl dieser Wandlertopologien ergeben sich aber auch Nachteile. So ist die Kombination aus zwei Schaltreglern sehr aufwendig und teuer in der Herstellung. Daher wurden viele Vorschläge unterbreitet, wie die Schaltungstopologie vereinfacht und die Herstellkosten gesenkt werden können. So wurde z.B in der EP 2 315 497 A1 vorgeschlagen, den Tiefsetzsteller durch einen Linearregler zu ersetzen. Dies ist jedoch nur möglich, wenn die zu betreibenden Halbleiterlichtquellen eine genügend hohe Spannung aufweisen, da die Ausgangsspannung beim Hochsetzsteller systembedingt sehr hoch ist.

### Aufgabe

Es ist Aufgabe der Erfindung, eine Schaltungsanordnung zum Betreiben einer Last vorzuschlagen, die einfach und kostengünstig herzustellen ist, und die vorgenannten Nachteile nicht mehr aufweist.

Es ist weiterhin Aufgabe der Erfindung, ein Verfahren zum Betreiben einer Last vorzuschlagen, welches mit obiger Schaltungsanordnung durchführbar ist und welches eine effizientere Ausnutzung der vorhandenen Ressourcen ermöglicht.

### Darstellung der Erfindung

Die Lösung der Aufgabe erfolgt bezüglich der Schaltungsanordnung erfindungsgemäß mit den Merkmalen des Anspruchs 1 und bezüglich des Verfahrens erfindungsgemäß mit den Merkmalen des Anspruchs 13.

Die erfindungsgemäße Schaltungsanordnung zum Betreiben einer Last weist auf:

- einen Eingang zum Eingeben einer Netzeingangswechselspannung,
- eine Stromrichterschaltung,
- eine getaktete Wandlerschaltung, die die durch die Stromrichterschaltung gleichgerichtete Netzeingangswechselspannung in eine Ausgangsspannung wandelt, wobei die Ausgangsspannung ($U_{21}$) eine Ripplespannung aufweist,
- eine Steuerschaltung zum Regeln der getakteten Wandlerschaltung,
- eine Messschaltung (73), die mit der Steuerschaltung gekoppelt ist,
- eine lineare Regelschaltung, die einen vorbestimmten Laststrom an der Last einstellt, wobei
- der Laststrom ein Gleichstrom mit einer gleichförmigen Stromstärke ist, und
- die Schaltungsanordnung eingerichtet ist, dass die getaktete Wandlerschaltung und lineare Regelschaltung so zusammenwirken, dass die lineare Regelschaltung die Ripplespannung der getakteten Wandlerschaltung im Minimum der Ausgangsspannung nicht mehr ausregeln kann, so dass es zu einer Strommodulation im Laststrom durch die Last kommt,
- wobei die Steuerschaltung eingerichtet ist, zur Regelung der getakteten Wandlerschaltung das Potential an einem Knotenpunkt zwischen der Last und der linearen Regelschaltung heranzuziehen.

Diese Maßnahme stellt sicher, dass alle Bauteile der erfindungsgemäßen Schaltungsanordnung optimal ausgenutzt werden, so dass bei kleinem Bauraum und geringen Kosten ein Maximum an Leistung an die Last abgegeben werden kann. Durch die Ausführung des einstufigen Wandlers ist gleichzeitig eine Leistungsfaktorkorrektur mit einer optimalen Betriebsweise der Last möglich.

Die Last besteht dabei bevorzugt aus Leuchtdioden (LEDs). Besonders bevorzugt sind mehrere LEDs in Serie geschaltet. Es sind aber auch Konstellationen von parallel geschalteten Strängen oder partiell parallel geschalteten LEDs möglich und unproblematisch.

Bevorzugt ist die Wandlerschaltung ein SEPIC-Wandler. Dies hat den Vorteil, dass mit einer Wandlerstufe eine Leistungsfaktorkorrektur der aufgenommenen Leistung und eine Tiefsetzung oder auch eine Hochsetzung der Ausgangsspannung bewerkstelligt werden kann. Damit ist ein sehr großer Ausgangsspannungsbereich realisierbar. Bei einem SEPIC Wandler kann die Last daher aus wenigen in Serie geschalteten LEDs bestehen, da die Ausgangsspannung des SEPIC Wandlers tiefgesetzt werden kann.

Bei einer anderen Ausführungsform ist die Wandlerschaltung ein Hochsetzsteller. Dies hat den Vorteil einer günstigeren Schaltung, da weniger und günstigere Bauteile eingesetzt werden können. Allerdings muss die Last hier aus einer Vielzahl von seriell verschalteten LEDs bestehen, da die Ausgangsspannung des Hochsetzstellers sehr hoch ist.

Bevorzugt wird zur Regelung der Wandlerschaltung das Potential an einem Knotenpunkt zwischen der Last und der linearen Regelschaltung herangezogen. Dies stellt eine hohe Effizienz der Schaltungsanordnung sicher, da die Ausgangsspannung mit dieser Maßnahme so geregelt wird, dass der Linearregler minimal belastet wird.

Eine Ausgestaltung ist es, dass ein Speicherkondensator derart mit dem Knotenpunkt gekoppelt ist, dass er dessen Potential aufweist, wobei das Potential des Speicherkondensators in dieSteuerschaltung zum Regeln der Ausgangsspannung der Wandlerschaltung eingegeben wird. Mit dieser Maßnahme wird die Steuerschaltung immer mit einem im Potential richtigen, aber entkoppelten Meßsignal versorgt. Dabei wird der Speicherkondensator über einen Ladewiderstand geladen, und über eine Entladediode auf das Potential des Knotenpunktes entladen. Dies sorgt für die notwendige Entkoppelung bei gleichzeitiger Potentialnachbildung.

Besonders bevorzugt ist ein Speicherkondensator über einen Spannungsteiler derart mit dem Knotenpunkt gekoppelt, dass er ein mit dem Knotenpunkt korrelierendes Potential aufweist, wobei das Potential das Speicherkondensators in die Steuerschaltung zum Regeln der Ausgangsspannung der Wandlerschaltung eingegeben wird. Durch den Spannungsteiler kann die Ausgangsspannung des Wandlers, auf die die Steuerschaltung regelt, angepasst werden. Hierbei ist es möglich, die Regelstrecke optimal auszubilden. Erfindungsgemäß wird der Regelpunkt so eingestellt, dass die Ausgangsspannung des Wandlers im Minimum der Ausgangsspannung nicht mehr ausreicht, um den vorbestimmten Laststrom aufrechtzuerhalten. Damit erfährt der Laststrom eine Modulation, die durch Auswahl der schaltungstechnischen Parameter, unter anderem durch die Widerstandswerte des Spannungsteilers, und die Abstimmung des Linearreglers eingestellt werden kann.

In einer Weiterbildung der besonders bevorzugten Ausführungsform wird der Speicherkondensator über einen Ladewiderstand geladen, und über eine Entladediode und den Spannungsteiler auf ein durch den Spannungsteiler und das Potential des Knotenpunktes definiertes Potential entladen. Dies sorgt wieder für die notwendige Entkoppelung bei gleichzeitiger Potentialnachbildung.

In einer weiteren Ausführungsform besteht der zweite Widerstand aus einer Serienschaltung aus einem dritten Widerstand und einem temperaturabhängigen Widerstand. Durch diese Maßnahme kann bei geeigneter Auslegung einfach, kostengünstig und elegant eine Temperaturrückregelung realisiert werden, die bei zu hoher Temperatur der Anordnung den Ausgangsstrom durch die LEDs reduzieren, um diese und die Schaltungsanordnung schützen kann.

In einer besonders bevorzugten Ausführungsform ist der temperaturabhängige Widerstand ein Kaltleiter (411). Damit kann die Temperaturrückregelung besonders einfach und kostensparend durchgeführt werden, indem der Kaltleiter in Serie zu dem Festwiderstand geschaltet wird.

In einer anderen Ausführungsform ist seriell zur Entladediode ein Kaltleiter angeordnet. Damit kann in einfacher Weise eine Temperaturrückregelung realisiert werden, die bei zu hohen Temperaturen den Strom durch die LEDs komplett abschaltet. Dadurch, dass nur ein Bauteil mehr Verwendung finden muss kann eine sehr kostengünstige Temperaturrückregelung realisiert werden.

Besonders bevorzugt ist parallel zum Kaltleiter noch ein Widerstand angeordnet. Dieser bewirkt, dass auch bei hohen Temperaturen ein Mindeststrom durch die LEDs erhalten bleibt.

Weitere vorteilhafte Weiterbildungen und Ausgestaltungen der erfindungsgemäßen Schaltungsanordnung zum Betreiben einer Last ergeben sich aus weiteren abhängigen Ansprüchen und aus der folgenden Beschreibung.

**Kurze Beschreibung der Zeichnungen**

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:

Fig. 1 Das Schaltbild einer ersten Ausführungsform der erfindungsgemäßen Schaltungsanordnung mit einem SEPIC-Wandler als Wandlerstufe und einem dahinter geschalteten Linearregler,

Fig. 2 das Schaltbild einer zweiten Ausführungsform der erfindungsgemäßen Schaltungsanordnung mit einem Hochsetzsteller als Wandlerstufe und einem dahinter geschalteten Linearregler,

Fig. 3 das Schaltbild einer dritten Ausführungsform der erfindungsgemäßen Schaltungsanordnung mit einem SEPIC-Wandler als Wandlerstufe und mehreren parallel dahinter geschalteten Linearreglern,

Fig. 4 eine beispielhafte Stromform für den erfindungsgemäßen Verarmungsbetrieb mit einer Modulationstiefe von etwa 9,5%,

Fig. 5 das Schaltbild einer dritten Ausführungsform der erfindungsgemäßen Schaltungsanordnung mit einem SEPIC-Wandler als Wandlerstufe und einer Temperaturrückregelung, die in den Verarmungsbetrieb eingreift,

Fig. 6 beispielhafte Stromformen für den erfindungsgemäßen Verarmungsbetrieb bei einer Temperaturrückregelung bei verschiedenen Temperaturen,

Fig. 7 das Schaltbild einer vierten Ausführungsform der erfindungsgemäßen Schaltungsanordnung mit einem SEPIC-Wandler als Wandlerstufe und einer Temperaturrückregelung, die in den Verarmungsbetrieb eingreift.

**Bevorzugte Ausführung der Erfindung**

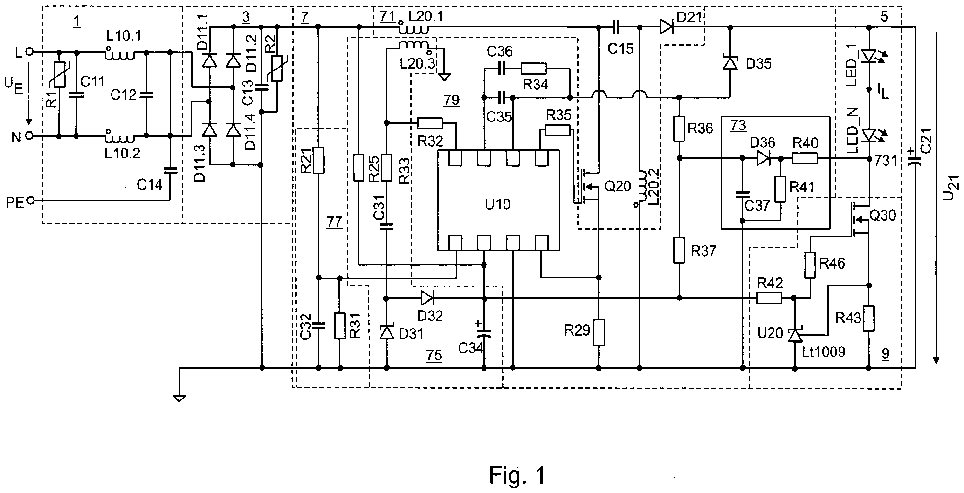

**Fig.** 1 zeigt ein bevorzugtes Ausführungsbeispiel der erfindungsgemäßen Schaltungsanordnung. Die Schaltungsanordnung weist ein Eingangsteil 1 auf, welches primär für die Filterung der eingegebenen Netzspannung sorgt. Im Eingangsteil befinden sich auch Bauteile, die zum Schutz der Schaltungsanordnung dienen. Dies können z.B. Varistoren oder TVS Dioden sein.

Der Eingangsteil 1 ist mit einem Stromrichterteil 3 verbunden, der die Netzwechselspannung in eine Gleichspannung umwandelt. Der Stromrichterteil 3 weist bevorzugt einen Vollwellengleichrichter auf.

An den Stromrichterteil 3 schließt sich die Wandlerstufe 7 an. Die Wandlerstufe 7 weist einen SEPIC-Wandler (single ended primary inductance converter) 71 auf. Dieser wird durch eine Steuerschaltung 79 angesteuert. Die notwendigen Messwerte werden mittels Messschaltungen 73, 77 ermittelt und der Steuerschaltung zugeführt. Eine Hilfsspannungsversorgung 75 versorgt die Steuerschaltung mit Energie.

Die Wandlerstufe 7 erzeugt eine Ausgangsspannung $U_{21}$, die in einen Linearregler 9 eingegeben wird. Der Linearregler 9 erzeugt aus der Spannung $U_{21}$ einen Strom für die Last 5, die bevorzugt aus mehreren in Serie geschalteten Leuchtdioden LED_1 .. LED-N besteht. Selbstverständlich können auch mehrere Stränge seriell verschalteter LEDs parallel geschaltet sein. Auch Mischformen von Seriell- und Parallelschaltungen sind möglich.

Der Eingangsteil 1 weist bevorzugt einen Filter aus einer stromkompensierten Drossel L10 auf, deren erste Anschlüsse mit zwei Eingängen L, N gekoppelt sind. Zwischen diesen Eingängen L, N ist ein Entstörkondensator C11 angeordnet. Zwischen den zweiten Anschlüssen der stromkompensierten Drossel L10 ist ein weiterer Entstörkondensator C12 angeordnet.

Parallel zum Entstörkondensator C11 ist ein Widerstand R1 angeordnet, der auch als Varistor ausgeführt sein kann. An den Knotenpunkt zwischen C12, R1 und dem Teil der stromkompensierten Drossel, welcher mit dem Eingang N gekoppelt ist, kann die Erde PE über einen Y-Kondensator C14 gekoppelt sein. Dies ist jedoch nicht zwingend notwendig.

Der Stromrichterteil 3 weist 4 Dioden D11.1 bis D11.4 auf, die in der Art eines Vollwellengleichrichters verschaltet sind. Am Ausgang des Vollwellengleichrichters ist ein Speicherkondensator C13 gekoppelt. Parallel zum Speicherkondensator C13 ist ein Widerstand R2 angeordnet, der auch als Varistor ausgeführt sein kann.

Die beiden Pole des Speicherkondensators C13 sind mit dem Eingang der Wandlerstufe 7 gekoppelt. Die Wandlerstufe 7 weist einen SEPIC Wandler 71 auf. Dieser weist eine erste Drossel L20.1 auf, deren erster Pol mit einem Pol des Speicherkondensators C13 gekoppelt ist. Der zweite Pol der Drossel L20.1 ist mit einem ersten Pol eines Wandlerkondensators C15 und mit der Arbeitselektrode eines Wandlertransistors Q20 gekoppelt. Der zweite Pol des Wandlerkondensators C15 ist mit dem ersten Pol einer zweiten Drossel L20.2 und mit der Anode einer Wandlerdiode D21 gekoppelt. Die erste Drossel L20.1 und die zweite Drossel L20.2 sind magnetisch miteinander gekoppelt. In der DE 10 2004 016 944 A1 sind die Vorteile der magnetischen Kopplung beider Drosseln offenbart. Die Kathode der Wandlerdiode D21 ist identisch mit dem Ausgang der Wandlerstufe 7. Der zweite Pol der zweiten Drossel L20.2 ist mit dem Bezugspotential des Eingangsteils 1 gekoppelt. Die Bezugselektrode des Wandlertransistors Q20 ist mit einem Widerstand R29 gekoppelt, dessen anderer Pol mit dem Bezugspotential des Eingangsteils 1 gekoppelt ist.

Die Steuerelektrode des Wandlertransistors Q20 ist mit einem Ausgang der Steuerschaltung 79 gekoppelt.

Die Steuerschaltung 79 weist einen ersten Eingang auf, der mit einer Serienschaltung zweier Widerstände R36 und R37 gekoppelt ist. Der Koppelpunkt der beiden Widerstände ist mit einer ersten Messschaltung 73 gekoppelt.

Eine zweite Messschaltung 77 besteht aus einem weiteren Spannungsteiler aus zwei Widerständen R21, R31 die seriell verschaltet sind. Die Widerstände sind zwischen die Eingangsanschlüsse der Wandlerstufe 7 geschaltet. Der Knotenpunkt dieser Widerstände ist mit einem zweiten Eingang der Steuerschaltung 79 gekoppelt. Parallel zum Widerstand R31 ist noch ein Kondensator C32 geschaltet.

Die Hilfsspannungsversorgung 75 weist eine Serienschaltung eines Startwiderstandes R25 und eines Speicherkondensators C34 auf. Der Startwiderstand ist mit dem positiven Eingangsanschluss der Wandlerstufe 7 gekoppelt. Der Speicherkondensator ist mit dem negativen Eingangsanschluss der Wandlerstufe 7 gekoppelt, der identisch ist mit dem Bezugspotential der Schaltungsanordnung. Der Verbindungspunkt zwischen dem Startwiderstand R25 und dem Speicherkondensator C34 ist der Ausgang der Hilfsspannungsversorgung 75 und versorgt unter anderem die Steuerschaltung 79. Der Startwiderstand R25 dient lediglich dazu den Kondensator C34 nach Anschluss an die Netzspannung aufzuladen so dass die Schaltung überhaupt starten kann. Versorgt wird die Schaltung von einer dritten Drossel L20.3, die mit der ersten Drossel L20.1 magnetisch gekoppelt ist, so dass sie als Transformator wirkt. Sobald der SEPIC Wandler angelaufen ist, wird in der dritten Drossel L20.3 eine Wechselspannung induziert, welche über einen optionalen ohmschen Widerstand R33 und einen Blockkondensator C31 auf eine Diode D32 geführt wird, die den Speicherkondensator C34 lädt und eine zuverlässige Hilfsspannung aufrechterhält. Der andere Anschluss der dritten Drossel L20.3 ist mit dem Bezugspotential der Schaltungsanordnung gekoppelt. Die Spannung wird durch eine Zenerdiode D31 eingestellt, deren Anode mit dem Bezugspotential der Schaltungsanordnung gekoppelt ist, und deren Kathode mit dem Verbindungspunkt zwischen der Anode der Diode D32 und dem Blockkondensator C31 gekoppelt ist. Über diese Zenerdiode kann die Spannung am Speicherkondensator C34 auf einen Maximalwert begrenzt werden. Bevorzugt beträgt die Spannung 15V-20V.

Der Ausgang der Hilfsspannungsversorgung 75 ist mit einem Ende der Serienschaltung der oben schon erwähnten beiden Widerstände R36 und R37 gekoppelt, deren anderes Ende mit dem ersten Eingang der Steuerschaltung 79 gekoppelt ist.

Die Steuerschaltung 79 weist eine integrierte Schaltung U10 auf, die den SEPIC-Wandler 71 regelt. Bevorzugt wird der SEPIC-Wandler 71 derart geregelt, dass ein hoher Netzleistungsfaktor am Eingang gesichert ist. Zu diesem Zweck wird die Netzspannung mit Hilfe der zweiten Messschaltung 77 gemessen und ein entsprechender Messwert in die Steuerschaltung 79 eingegeben. Diese Maßnahme ist aber nicht bei jeder integrierten Schaltung notwendig, es sind auch integrierte Schaltungen bekannt, die die notwendigen Informationen aus dem Ripple der Ausgangsspannung herleiten können. Für solche integrierte Schaltungen ist dann keine zweite Messschaltung 77 notwendig. Die Steuerschaltung 79 regelt die Spannung des SEPIC-Wandlers 71 auf die Spannung, die über den Widerstand R36 in den ersten Eingang eingegeben wird.

Die Last 5 weist bevorzugt eine Serienschaltung aus mehreren LEDs auf. Wie oben schon erwähnt können die LEDs auch partiell oder komplett parallel geschaltet werden. Die Kathode der ersten LED LED_1 ist mit dem Ausgang der Wandlerstufe 7 gekoppelt, die Kathode der letzten LED LED_N ist mit dem Ausgang des Linearreglers 9 gekoppelt.

Der Linearregler 9 weist einen Transistor Q30 auf, dessen Arbeitselektrode mit der Kathode der letzten LED LED_N gekoppelt ist, die damit den Ausgang des Linearreglers 9 bildet. Die Bezugselektrode des Transistors Q30 ist mit einem Shuntwiderstand R43 gekoppelt. Der andere Anschluss des Shuntwiderstandes R43 ist mit dem Bezugspotential der Schaltungsanordnung gekoppelt. Der Knotenpunkt zwischen der Bezugselektrode und dem Shuntwiderstand R43 ist mit einer Spannungsreferenz U20 gekoppelt. Die Anode der Spannungsreferenz U20 ist mit dem Bezugspotential der Schaltungsanordnung gekoppelt. Die Kathode der Spannungsreferenz ist mit dem Knotenpunkt aus zwei seriell geschalteten Widerständen R42 und R46 gekoppelt, deren eines Ende mit der Steuerelektrode des Transistors Q30 gekoppelt ist, und deren anderes Ende mit dem Ausgang der Hilfsspannungsversorgung 75 gekoppelt ist. Der Widerstand R42 dient der Versorgung der Spannungsreferenz U20. Der Widerstand R46 dient der Entkoppelung der Steuerelektrode des Transistors Q30 und ist optional.

Ein Speicherkondensator C21 ist mit dem Ausgang der Wandlerstufe 7 und dem Bezugspotential gekoppelt. An ihm liegt die Ausgangsspannung U21 der Wandlerstufe 7 an.

Zur Funktionsweise:

Erfindungsgemäß wirken der SEPIC-Wandler und der Linearregler so zusammen, dass der Linearregler die Ripplespannung des Sepicwandlers im Minimum der Ausgangsspannung $U_{21}$ nicht mehr ausregeln kann, so dass es zu einer Strommodulation im Laststrom durch die Last 5 kommt. Die Ausgangsspannung $U_{21}$ weist einen relativ kleinen Ripple auf, der von der Sinusschwingung der Netzspannung herrührt. Durch Auslegung der erfindungsgemäßen Schaltungsanordnung kann die Höhe der Strommodulation eingestellt werden.

Als Strommodulation wird im Folgenden der Quotient aus der Differenz des Maximalstroms mit dem Minimalstrom und der Summe des Maximalstroms und dem Minimalstrom angesehen. In einer Formel kann die Modulation also folgendermaßen definiert werden:

$$Strommodulation = \frac{I_{max} - I_{min}}{I_{max} + I_{min}}$$

Dadurch, dass die Schaltungsanordnung im Minimum der Ausgangsspannung $U_{21}$ nicht mehr den vollen Strom liefern können muss, können die Bauteile der Schaltungsanordnung wesentlich besser ausgenutzt werden, beziehungsweise wesentlich kleiner dimensioniert werden. Das spart Bauraum und Kosten. Abhängig von der Strommodulation ist eine erhebliche Bauraumreduzierung realisierbar.

In den aus dem Stand der Technik bekannten Schaltungsanordnungen wird der Wandler üblicherweise auf eine konstante Ausgangsspannung geregelt. Auf den vorliegenden Fall übertragen würde ein bekannter Wandler so geregelt werden, dass die Ausgangsspannung $U_{21}$ der Wandlerstufe 7 konstant bleibt.

Erfindungsgemäß wird der SEPIC-Wandler nicht auf eine konstante Ausgangsspannung geregelt, sondern auf eine Spannung, die von der Meßschaltung 73 erzeugt wird. Die Meßschaltung 73 weist einen ersten Eingang auf, der mit dem Potential des Knotenpunktes 731 zwischen der Arbeitselektrode des Transistors Q30 und der Kathode der letzten LED LED_N gekoppelt ist. Die Spannung an diesem Knotenpunkt schwankt aufgrund des Spannungsrippels des SEPIC-Wandlers 71. Die erfindungsgemäße Schaltungsanordnung ist bewusst so ausgelegt, dass am Ausgang des SEPIC-Wandlers 71 ein signifikanter Spannungsrippel auftritt, da der Speicherkondensator C21 vergleichsweise klein in seinem Kapazitätswert ist. Diese Maßnahme spart Kosten und Bauraum. Der Linearregler 9 gleicht diese Spannungsschwankungen wieder aus, so dass die LEDs mit einem gleichförmigen Laststrom betrieben werden und eine gleichmäßige Lichtabgabe aufweisen. Dadurch weist jedoch das Potential am Punkt 731 annähernd den gleichen Spannungsrippel auf wie das Potential am Ausgang des SEPIC-Konverters 71.

Die Meßschaltung 73 weist einen Kondensator C37 auf, dem eine Serienschaltung aus einer Diode D36 und einem Widerstand R41 parallelgeschaltet ist. Der Knotenpunkt zwischen der Kathode der Diode D36 und dem Widerstand R41 ist mit einem Widerstand R40 gekoppelt, dessen anderes Ende wiederum mit dem ersten Eingang der Messschaltung 73 gekoppelt ist. Der Knotenpunkt zwischen der Anode der Diode D36 und dem Kondensator C37 bildet den Ausgang der Messschaltung 73. Der Ausgang der Meßschaltung 73 ist mit dem Knotenpunkt der zwei Widerstände R36 und R37 gekoppelt. Da der Widerstand R37 wiederum mit dem Ausgang der Hilfsspannungsversorgung 75 gekoppelt ist, wird der Kondensator C37 auf die Spannung der Hilfsspannungsversorgung 75 aufgeladen. Dies funktioniert aber nur so lange, wie das Potential am Punkt 731 größer ist als das Potential des Kondensators C37, da die Diode D36 dann die Potentiale entkoppelt. Ist das Potential am Punkt 731 jedoch kleiner als das Potential am Kondensator C37, dann kann ein Strom über die Diode D36 in den Punkt 731 fließen. Der Kondensator C37 wird somit durch die Hilfsspannungsversorgung 75 geladen, und über die Diode D36 und den Widerstand R40 auf die Spannung am Punkt 731 entladen. Die beiden seriell geschalteten Widerstände R40 und R41 bilden dabei einen Spannungsteiler, über den das Potential des Kondensators C37 verglichen zum Punkt 731 angepasst werden kann. Dadurch, dass der Widerstand R40 einen kleineren Widerstandswert aufweist als der Widerstand R37, wird die Spannung am Kondensator C37 der Spannung am Punkt 731 unter Berücksichtigung des Spannungsteilers nachgeführt. Die am Ausgang der Messschaltung 75 anliegende Spannung des Kondensators C37 wird über den Widerstand R36 in den ersten Eingang der Steuerschaltung 79 eingegeben.

Die Steuerschaltung 79 "sieht" an ihrem Eingang also immer eine Spannung, die der durch den Spannungsteiler R40/R41 herunter geteilten Minimalspannung im Punkt 731 entspricht. Grundsätzlich kann dadurch die Spannung so geregelt werden, dass sie der Summenspannung der maximal auftretenden Flussspannung der LEDs zusammen mit der Spannung über dem Transistor Q30 und der Spannung am Shuntwiderstand R43 entspricht. Dadurch muss der Linearregler im Wesentlichen nur noch den Spannungsrippel des SEPIC-Wandlers 71 kompensieren, so dass die Verlustleistung minimiert wird.

Zusätzlich ist zwischen dem Ausgang des Wandlers, also an der Kathode der Diode D21 und dem Eingang der Steuerschaltung 79 noch eine Zenerdiode D35 geschaltet, die die Ausgangsspannung $U_{21}$ des Wandlers noch zusätzlich begrenzt. Dabei ist die Kathode der Zenerdiode D35 mit der Kathode der Diode D21 gekoppelt. Die Anode der Zenerdiode D35 ist mit dem Eingang der Steuerschaltung 79 gekoppelt. Bei einer zu hohen Ausgangsspannung wird die Zenerdiode leitend und addiert ein Signal zu dem Signal der Messschaltung 75. Dabei hat das Signal der Zenerdiode D35 eine stärkere Auswirkung als das Signal der Messschaltung 73. Bei zu hoher Spannung, z.B. weil zu viele LEDs an den Ausgang angeschlossen werden, wird die Schaltung aktiv geschützt, da die Ausgangsspannung auf einen durch den Wert der Zenerdiode D35 vorgegebenen Wert begrenzt wird.

Dabei kann das Temperaturverhalten der Zenerdiode D35 zusätzlich genutzt werden, indem die kleinere Spannung der Zenerdiode D35 bei kalten Temperaturen zu einer niedrigeren Ausgangsspannung und damit zu einem niedrigeren Ausgangsstrom führt, und so den bei tiefen Temperaturen hochohmigeren Speicherkondensator C21 aktiv schützt.

Der Linearregler 9 ist so dimensioniert, dass durch die seriell verschalteten LEDs immer der vorgegebene Strom fließt. Die Strecke zwischen Arbeitselektrode und Bezugselektrode des Transistors Q30 kompensiert also den Spannungsripple, so dass durch die LEDs immer ein Gleichstrom vorgegebener Stärke fließt. Der Strom wird über den Shuntwiderstand R43 gemessen und durch die Referenzspannungsquelle U20 und die Widerstände R42/R46 wird an die Steuerelektrode ein Steuersignal abgegeben, so dass eine Regelstrecke entsteht. Über die Dimensionierung des Shuntwiderstandes R43, und die Referenzspannungsquelle U20 kann die Stromstärke eingestellt werden, auf die der Linearregler regelt.

Erfindungsgemäß wird nun der Spannungsteiler R40/R41 so dimensioniert, dass der SEPIC-Wandler die Spannung an seinem Ausgang so regelt, dass sie kleiner ist als die Summenspannung der Flussspannung der LEDs zusammen mit der Spannung über dem Transistor Q30 und der Spannung am Shuntwiderstand R43. Die Spannung am Shuntwiderstand R43 ergibt sich durch die Spannung der Referenzspannungsquelle U20. Die Verluste im Shuntwiderstand R43 können durch geeignete Wahl einer Referenzspannungsquelle U20 mit kleinerer Referenzspannung gesenkt werden. Durch die Tatsache, dass die Summenspannung größer ist als die Spannung am Ausgang des SEPIC_Wandlers 71 ist der Linearregler 9 nicht mehr in der Lage, die Stromstärke im Minimum der Ausgangsspannung $U_{21}$ aufrechtzuerhalten, der Strom durch die LEDs ist damit kein gleichförmiger Strom mehr, sondern sinkt im Minimum der Ausgangsspannung $U_{21}$ etwas ab. Dieses Absenken wird im Folgenden auch als Verarmungsbetrieb bezeichnet. Damit entsteht eine Strommodulation im Laststrom durch die LEDs. Die Höhe der Strommodulation kann über die Dimensionierung der Widerstände R40/R41 eingestellt werden.

Durch diese Maßnahme werden die Bauteile der Schaltungsanordnung optimal ausgenutzt, und die Schaltungsanordnung kann bei gleicher Bauteiledimensionierung einen höheren Strom beziehungsweise eine höhere Leistung an die LEDs abgeben als die aus dem Stand der Technik bekannten Schaltungen.

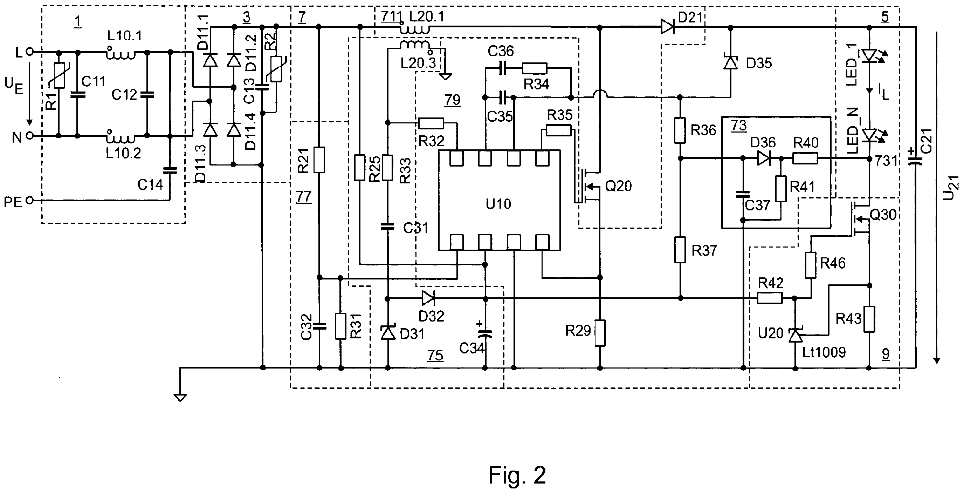

Fig. 2 zeigt das Schaltbild einer zweiten Ausführungsform der erfindungsgemäßen Schaltungsanordnung mit einem Hochsetzsteller als Eingangsstufe und einem dahinter geschalteten Linearregler als Ausgangsstufe. Die zweite Ausführungsform ist ähnlich zur ersten Ausführungsform, daher werden nur die Unterschiede zur ersten Ausführungsform beschrieben. Die zweite Ausführungsform weist anstelle des SEPIC-Wandlers 71 einen Hochsetzsteller 711 auf. Die Schaltungsanordnung ist also bis auf die zwei für einen SEPIC-Wandler fehlenden Bauteile identisch. Diese beiden Bauteile sind der Wandlerkondensator C15 und die zweite Drossel L20.2. Diese Bauteile benötigt ein Hochsetzsteller nicht, daher fehlen diese bei der zweiten Ausführungsform.

Der Hochsetzsteller 711 weist gegenüber dem Sepic-Wandler 71 den Nachteil auf, dass die Ausgangsspannung des Wandlers immer höher sein muss als das Netzspannungsmaximum. Das führt dazu, dass viele in Serie geschaltete LEDs als Last notwendig sind, um die erfindungsgemäße Betriebsweise realisieren zu können. Die Flußspannung der LEDs darf ja nur geringfügig kleiner sein als das Minimum der Ausgangsspannung $U_{21}$ des Wandlers. Die minimale Ausgangsspannung $U_{21}$ eines Hochsetzstellers ist bei einer 230V Netzeingangsspannung ca. 360V. Bei einer durchschnittlichen Flußspannung einer LED von ca. 3V sind also mindestens 120 seriell verschaltete LEDs notwendig. Natürlich können auch hier wieder Parallelstränge mit betrieben werden um die Anzahl der LEDs weiter zu erhöhen. Ist die Anzahl der seriell verschalteten LEDs der LED-Kette LED_1 bis LED_N groß genug, so kann die Schaltungsanordnung in der erfindungsgemäßen Weise betrieben werden.

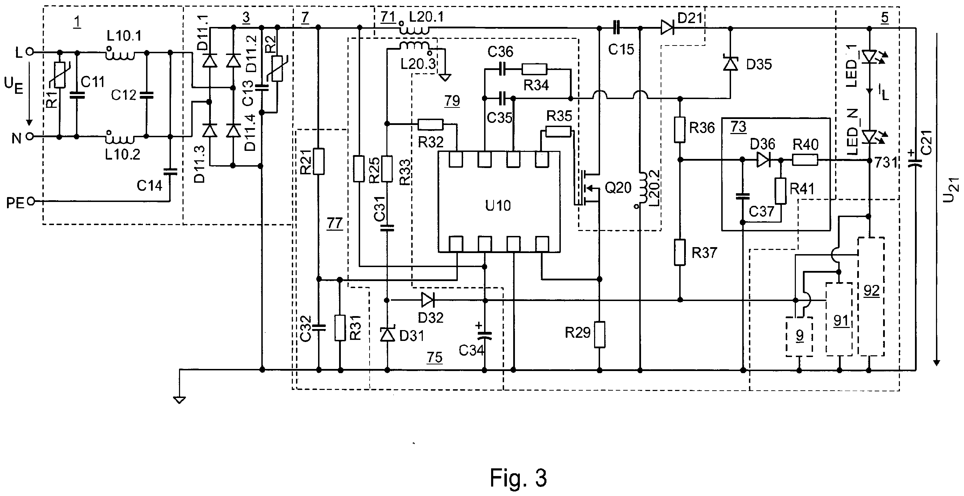

Fig. 3 zeigt das Schaltbild einer dritten Ausführungsform der erfindungsgemäßen Schaltungsanordnung mit einem SEPIC-Wandler als Wandlerstufe und mehreren parallel dahinter geschalteten Linearreglern. Die dritte Ausführungsform ist ähnlich zur ersten Ausführungsform, daher werden nur die Unterschiede zur ersten Ausführungsform beschrieben. In der dritten Ausführungsform sind neben dem Linearregler 9 noch weitere Linearregler 91 und 92 parallel geschaltet, so dass sich der Gesamtstrom auf diese Linearregler aufteilt. Durch Streuungen der Bauteiletoleranzen kann es vorkommen, dass der Strom nicht zu genau gleichen Teilen aufgeteilt wird. Dabei ist dann der Linearregler, der die größte Spannung einstellt, sozusagen der "Master", dem die anderen Linearregler folgen.

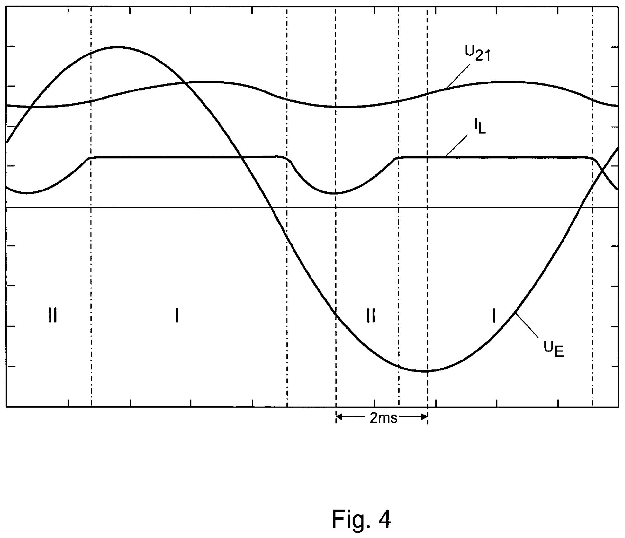

Fig. 4 zeigt eine beispielhafte Stromform $I_L$ für den erfindungsgemäßen Verarmungsbetrieb mit einer Modulationstiefe von etwa 9,5%. Es ist in der Figur gut zu sehen, dass der ansonsten gleichförmige Strom $I_L$ im Minimum der Ausgangsspannung $U_{21}$ absinkt, da die Ausgangsspannung des Wandlers 71 dann nicht mehr ausreicht, um den vorbestimmten Strom durch die Last aufrechtzuerhalten. Dieser Bereich ist mit der römischen Ziffer II gekennzeichnet, und durch strichgepunktete Linien abgegrenzt. Die römische Ziffer I hingegen kennzeichnet den Bereich, in dem der Ausgangsstrom $I_L$ seinen nominalen Wert erreicht. Dabei ist der Strom in diesem Bereich gleichförmig, d.h. er weist zeitlich gesehen immer dieselbe Stromhöhe auf. Das Minimum der Ausgangsspannung $U_{21}$ ergibt sich aus dem Netzspannungsminimum, da die Regelcharakteristik des Wandlers zu langsam ist. Zwischen dem Minimum der Ausgangsspannung $U_{21}$ und dem Netzspannungsminimum, die beide durch gestrichelte Linien gekennzeichnet sind, besteht eine Phasenverschiebung von ca. 2 ms. Die Strommodulation ergibt sich aber aus dem Minimum der Ausgangsspannung $U_{21}$, und nicht direkt aus dem Minimum der Netzeingangsspannung $U_E$.

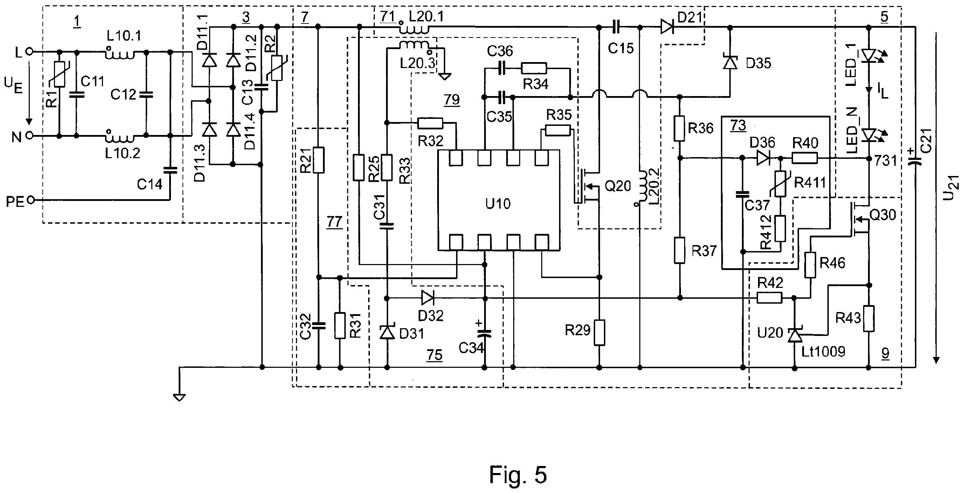

Fig. 5 zeigt das Schaltbild einer dritten Ausführungsform der erfindungsgemäßen Schaltungsanordnung mit einem SEPIC-Wandler als Wandlerstufe und einer Temperaturrückregelung, die vorteilhaft in den Verarmungsbetrieb eingreift. Die dritte Ausführungsform ist ähnlich zur ersten Ausführungsform, daher werden nur die Unterschiede zur ersten Ausführungsform beschrieben. Die vorteilhafte Temperaturrückregelung ist in die erste Messschaltung 73 integriert. Vorteilhaft ist hier der Widerstand R41 des Spannungsteilers aus R40/R41 in zwei seriell geschaltete Widerstände aufgeteilt: Einen Festwiderstand R412 und einen Kaltleiter (PTC) R411. Wie oben schon beschrieben, "sieht" die Steuerschaltung 79 an ihrem Eingang immer eine Spannung, die der durch den Spannungsteiler R40/R41 herunter geteilten Minimalspannung im Punkt 731 entspricht. Dadurch, dass der Widerstand R41 durch die Serienschaltung der Widerstände R411 und R412 ersetzt wird, wobei der Widerstand R411 ein Kaltleiter ist, kann einfach und elegant eine Temperaturrückregelung realisiert werden. Steigt die Temperatur, so vergrößert sich der Widerstand des Kaltleiters R411. Dies hat zur Folge, dass sich das Verhältnis des Spannungsteilers derart verschiebt, dass das Potential an der Kathode der Diode D36 steigt. Da dieses Potential ursächlich für die Stromregelung ist, wird der Steuerschaltung 79 bei steigender Temperatur ein höherer Strom vorgegaukelt, als in Wirklichkeit fließt.

Damit reduziert die Steuerschaltung 79 die Ausgangsspannung U21, was in einem niedrigeren Strom durch die LEDs LED_1..LED_N resultiert. Je nach Auslegung kann diese Maßnahme dazu führen, dass bei hohen Temperaturen der Strom erheblich, im Grenzfall bis auf 0 reduziert wird.

Bei sehr ungünstigen Auslegungen kann es vorkommen, dass eine Erhöhung des vormaligen Widerstandes R41 durch den Kaltleiter R411 nicht genügend Wirkung zeigt, um die Schaltung zu schützen. Dies ist dann der Fall, wenn der Widerstand R41 im Widerstandswert groß ist gegenüber dem Widerstand R40. Dann wirkt sich eine Widerstandserhöhung des Widerstandes R41 nur noch minimal auf das Potential an der Kathode der Diode D36 aus. In diesem Fall kann der Transistor Q30 so gewählt werden, dass sein Bahnwiderstand ($RDS_{On}$) größer ist. Damit erhöht sich das Nutzsignal des Linearreglers 9, womit ein günstigeres Spannungsteilerverhältnis des Spannungsteilers aus den Widerständen R40 und R41 (wobei der Widerstand R41 der Serienschaltung aus R411 und R412 entspricht) gewählt werden kann.

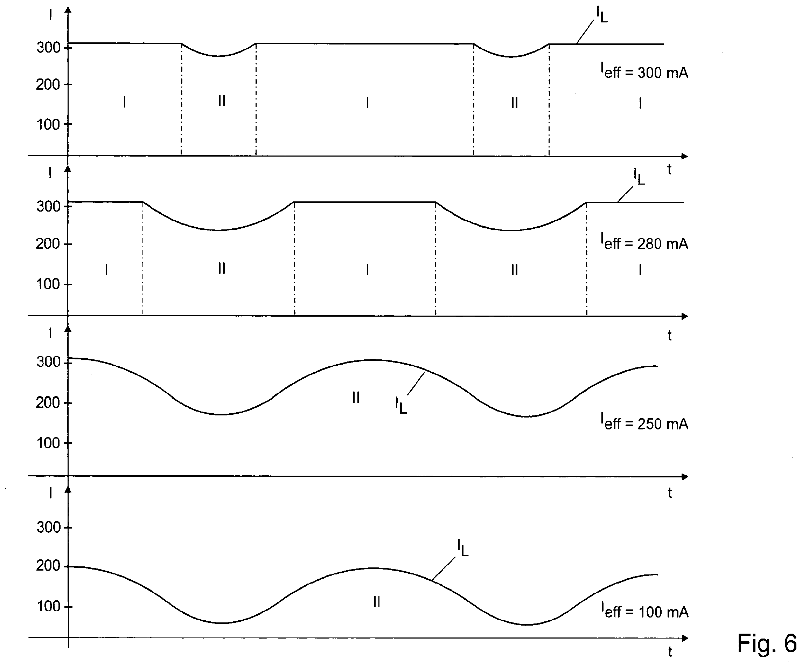

**Fig. 6** zeigt einige beispielhafte Stromformen des Ausgangsstromes $I_L$ für den erfindungsgemäßen Verarmungsbetrieb bei einer Temperaturrückregelung gemäß der Fig. 5 bei verschiedenen Temperaturen. Dabei wird wie in Fig. 4 zwischen einem Rückregelbereich II und einem Bereich I mit nominalem Ausgangsstrom unterschieden.

Die oberste Kurve der Fig. 6 zeigt den Verarmungsbetrieb bei einer unproblematischen Temperatur, d.h. die Temperaturrückregelung greift hier noch nicht ein. Bei dieser Temperatur weist der Kaltleiter R411 noch einen Widerstand auf, der gegenüber dem Widerstand R412 klein ausfällt. Damit wird der Gesamtwiderstand der Serienschaltung durch den Festwiderstand R412 bestimmt. Der Widerstandswert des Festwiderstandes R412 kann z.B. 30kOhm betragen, während der Nominalwert des Kaltleiters 470 Ohm beträgt. Der Effektivwert des Ausgangsstromes ergibt sich hier z.B. zu 300mA.

Die zweite Kurve von oben zeigt den Ausgangsstrom $I_L$ bei leicht erhöhter Temperatur. Es ist gut zu sehen, dass die Modulationstiefe des Ausgangsstromes $I_L$

zugenommen hat, und der Strom im Rückregelbereich II stärker zurückgeht als in der ersten Kurve. Der Effektivwert des Ausgangsstromes ergibt sich hier z.B. zu 280mA.

Die dritte Kurve von oben zeigt den Ausgangsstrom $I_L$ bei stärker erhöhter Temperatur. Es ist deutlich zu sehen, dass der Bereich I mit nominalem Ausgangsstrom nicht mehr erreicht wird, der Strom spiegelt die Ripplespannung der Ausgangsspannung $U_{21}$ wieder. Der Effektivwert des Ausgangsstromes ergibt sich hier z.B. zu 250mA.

Die unterste Kurve zeigt den Ausgangsstrom $I_L$ bei sehr stark erhöhter Temperatur. Es ist gut zu sehen, dass der Ausgangsstrom einen deutlich geringeren DC-Anteil aufweist. Ansonsten zeigt er denselben Ripple wie in der vorherigen Kurve. Wie schon erwähnt, rührt der Ripple im Strom von der Ausgangsspannung $U_{21}$ her. Der Effektivwert des Ausgangsstromes ergibt sich hier z.B. zu 100mA.

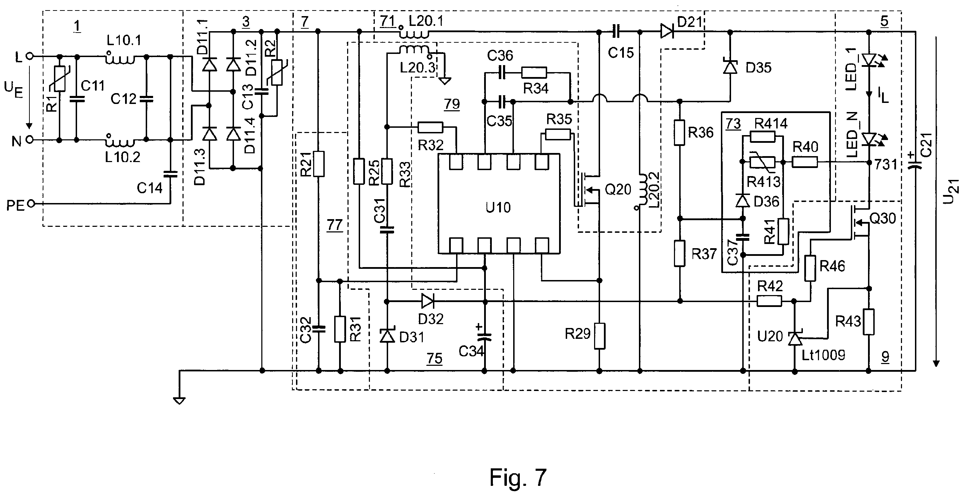

Fig. 7 zeigt das Schaltbild einer vierten Ausführungsform der erfindungsgemäßen Schaltungsanordnung mit einem SEPIC-Wandler als Wandlerstufe und einer Temperaturrückregelung, die in den Verarmungsbetrieb eingreift. Die vierte Ausführungsform ist ähnlich zur ersten Ausführungsform, daher werden nur die Unterschiede zur ersten Ausführungsform beschrieben. Die vierte Ausführungsform weist einen Kaltleiter (PTC) im Entladestrompfad des Kondensators C37 auf. Der Kondensator C37 wird hier also wie in der ersten Ausführungsform durch die Hilfsspannungsversorgung 75 geladen, aber über die Diode D36, den Kaltleiter R413 und den Widerstand R40 auf die Spannung am Punkt 731 entladen. Dem Kaltleiter R413 ist in dieser Ausführungsform noch ein Widerstand R414 parallelgeschaltet. Die beiden seriell geschalteten Widerstände R40 und R41 bilden einen Spannungsteiler, über den das Potential des Kondensators C37 verglichen zum Punkt 731 angepasst werden kann. Solange die Schaltungsanordnung kalt ist, weist der Kaltleiter einen kleinen Widerstandswert auf. Dadurch, dass die Serienschaltung aus dem Widerstand R40 und dem Kaltleiter R413 einen kleineren Widerstandswert aufweist als der Widerstand R37, wird die Spannung am Kondensator C37 der Spannung am Punkt 731 unter Berücksichtigung des Spannungsteilers nachgeführt. Der recht hohe Widerstandswert des Widerstandes R414 ändert obige Betrachtung nicht. In der vierten Ausführungsform weist der Kaltleiter R413 z.B. einen Widerstandswert von 470 Ohm auf, während der parallel geschaltete Widerstand R414 einen Widerstandswert von 10 Kiloohm aufweist. In kaltem Zustand ist der Widerstandswert des Kaltleiters R413 viel kleiner als der Wert des Widerstandes R40, daher ist er für den Entladestrom des Kondensators C37 nicht bestimmend.

Wenn der Kaltleiter R413 aber heiß wird, so wird sein Widerstandswert viel Größer als der Wert von R40, so dass er das bestimmende Bauteil für den Entladestrom von C37 ist. Der Widerstandswert von R413 wird dabei so groß, dass der Kondensator C37 praktisch gar nicht mehr entladen wird. Damit stellt sich eine dauerhaft hohe Spannung an C37 ein, und der Strom durch die LEDs 5 wird praktisch auf null herunter geregelt. Damit dies nicht passiert, ist der Widerstand R414 zum Kaltleiter R413 parallel geschaltet. Dies bewirkt eine Abschwächung der Rückregelkurve, so dass bei heißer Schaltung trotzdem noch ein Mindeststrom durch die LEDs 5 fließen kann. Über die Dimensionierung des Widerstandes R414 kann der Mindeststrom durch die LEDs 5 eingestellt werden. Ist dieser nicht notwendig, kann der Widerstand 414 auch weggelassen werden.

Bezugszeichenliste

| 1 | Eingangsteil |
|---|---|
| 3 | Stromrichterteil |
| 5 | Last |
| 7 | Wandlerstufe |
| 9 | Linearregler |
| 71 | SEPIC-Wandler |
| 73 | erste Messschaltung |
| 75 | Hilfsspannungsversorgung |
| 77 | zweite Messschaltung |
| 79 | Steuerschaltung |
| 711 | Hochsetzsteller |
| R40 | erster Widerstand |
| R41 | zweiter Widerstand |
| R411 | Kaltleiter |
| R412 | dritter Widerstand |

**Patentansprüche**

1. Schaltungsanordnung zum Betreiben einer Last (5), wobei die Schaltungsanordnung aufweist:

    - einen Eingang (L, N, PE) zum Eingeben einer Netzeingangswechselspannung,
    - eine Stromrichterschaltung (3)
    - eine getaktete Wandlerschaltung (71, 711), die die durch die Stromrichterschaltung gleichgerichtete Netzeingangswechselspannung ($U_E$) in eine Ausgangsspannung ($U_{21}$) wandelt, wobei die Ausgangsspannung ($U_{21}$) eine Ripplespannung aufweist,
    - eine Steuerschaltung (79) zum Regeln der getakteten Wandlerschaltung (71, 711),
    - eine Messschaltung (73), die mit der Steuerschaltung über einen Spannungsteiler (R36, R37) gekoppelt ist,

    **dadurch gekennzeichnet, dass** die Schaltungsanordnung weiterhin aufweist:

    - eine lineare Regelschaltung (9), die einen vorbestimmten Laststrom an der Last (5) einstellt, wobei

    - die Schaltungsanordnung derart eingerichtet ist, dass die getaktete Wandlerschaltung (71, 711) und lineare Regelschaltung (9) so zusammenwirken, dass die lineare Regelschaltung (9) die Ripplespannung der getakteten Wandlerschaltung (71, 711) im Minimum der Ausgangsspannung ($U_{21}$) nicht mehr ausregeln kann, so dass es zu einer Strommodulation im Laststrom durch die Last (5) kommt,
    - wobei die Steuerschaltung (79) dafür dazu eingerichtet ist, mittels der Messschaltung (73) zur Regelung der getakteten Wandlerschaltung (71, 711) das Potential an einem Knotenpunkt (731) zwischen der Last (5) und der linearen Regelschaltung (9) heranzuziehen

2. Schaltungsanordnung gemäß Anspruch 1, **dadurch gekennzeichnet, dass** die Wandlerschaltung ein SEPIC-Wandler (71) ist.

3. Schaltungsanordnung gemäß Anspruch 1, **dadurch gekennzeichnet, dass** die Wandlerschaltung ein Hochsetzsteller (711) ist.

4. Schaltungsanordnung gemäß Anspruch 1, **dadurch gekennzeichnet, dass** ein Speicherkondensator (C37) derart mit dem Knotenpunkt (731) gekoppelt ist, dass er zumindest abschnittsweise dessen Potential aufweist, wobei die Schaltungsanordnung eingerichtet ist, das Potential des Speicherkondensators (C37) in die Steuerschaltung (79) zum Regeln der Ausgangsspannung der Wandlerschaltung (71) einzugeben.

5. Schaltungsanordnung gemäß Anspruch 4, **dadurch gekennzeichnet, dass** der Speicherkondensator (C37) über einen Ladewiderstand (R37) auf die Spannung einer Hilfsspannungsversorgung (75) geladen wird, und über eine Entladediode (D36) auf das Potential des Knotenpunktes (731) entladen wird.

6. Schaltungsanordnung gemäß Anspruch 1, **dadurch gekennzeichnet, dass** ein Speicherkondensator (C37) über einen Ladewiderstand (R37) auf die Spannung einer Hilfsspannungsversorgung (75) geladen wird, und über einen Spannungsteiler (R40, R41) aus einem ersten (R40) und einem zweiten (R41) Widerstand auf ein mit dem Knotenpunkt (731) korrelierendes Potential über eine Entladediode (D36) entladen wird, wobei das Potential das Speicherkondensators (C37) in die Steuerschaltung (79) zum Regeln der Ausgangsspannung der Wandlerschaltung (71) eingegeben wird.

7. Schaltungsanordnung gemäß Anspruch 6, **dadurch gekennzeichnet, dass** seriell zur Entladediode (D36) ein Kaltleiter (R413) angeordnet ist.

**8.** Schaltungsanordnung gemäß Anspruch 7, **dadurch gekennzeichnet, dass** parallel zum Kaltleiter (R413) ein Widerstand (R414) angeordnet ist.

**9.** Schaltungsanordnung gemäß einem der vorhergehenden Ansprüche, **dadurch gekennzeichnet, dass** zur Begrenzung der Ausgangsspannung der Wandlerschaltung (71, 711) eine Zenerdiode (D35) zwischen den Ausgang der Wandlerschaltung (71, 711) und die Steuerschaltung (79) geschaltet ist.

**10.** Schaltungsanordnung gemäß Anspruch 6, **dadurch gekennzeichnet, dass** der zweite Widerstand (R41) aus einer Serienschaltung aus einem dritten Widerstand (R412) und einem temperaturabhängigen Widerstand besteht.

**11.** Schaltungsanordnung gemäß Anspruch 10, **dadurch gekennzeichnet, dass** der temperaturabhängige Widerstand ein Kaltleiter (R411) ist.

**12.** Schaltungsanordnung gemäß Anspruch 4, **dadurch gekennzeichnet, dass** der Speicherkondensator (C37) derart mit dem Knotenpunkt (731) gekoppelt ist, dass er dessen Potential aufweist, wenn das Potential des Knotenpunktes (731) kleiner ist als das des Speicherkondensators (C37).

**13.** Verfahren zum Betreiben einer Last (5), mit einer Schaltungsanordnung gemäß Anspruch 1, **dadurch gekennzeichnet, dass** die getaktete Wandlerschaltung (71, 711) und lineare Regelschaltung (9) so betrieben werden, dass die lineare Regelschaltung (9) die Ripplespannung der getakteten Wandlerschaltung (71, 711) im Minimum der Ausgangsspannung ($U_{21}$) nicht mehr ausregeln kann, so dass es zu einer Strommodulation im Laststrom durch die Last (5) kommt.

**Claims**

**1.** Circuit arrangement for operating a load (5), wherein the circuit arrangement has:

- an input (L, N, PE) for inputting a mains input AC voltage,
- a power converter circuit (3),
- a clocked converter circuit (71, 711) which converts the mains input AC voltage ($U_E$) rectified by the power converter circuit into an output voltage ($U_{21}$), wherein the output voltage ($U_{21}$) has a ripple voltage,
- a control circuit (79) for regulating the clocked converter circuit (71, 711),
- a measurement circuit (73) which is coupled to the control circuit via a voltage divider (R36, R37),

**characterized in that** the circuit arrangement also has:

- a linear regulating circuit (9) which sets a predetermined load current at the load (5), wherein
- the circuit arrangement is configured such that the clocked converter circuit (71, 711) and the linear regulating circuit (9) interact in such a manner that the linear regulating circuit (9) can no longer adjust the ripple voltage of the clocked converter circuit (71, 711) when the output voltage ($U_{21}$) is at a minimum, thus resulting in current modulation in the load current through the load (5),
- wherein the control circuit (79) is configured to use the potential at a node (731) between the load (5) and the linear regulating circuit (9) to regulate the clocked converter circuit (71, 711) by means of the measurement circuit (73).

**2.** Circuit arrangement according to Claim 1, **characterized in that** the converter circuit is a SEPIC converter (71).

**3.** Circuit arrangement according to Claim 1, **characterized in that** the converter circuit is a boost converter (711).

**4.** Circuit arrangement according to Claim 1, **characterized in that** a storage capacitor (C37) is coupled to the node (731) in such a manner that it has its potential at least in sections, wherein the circuit arrangement is configured to input the potential of the storage capacitor (C37) to the control circuit (79) for the purpose of regulating the output voltage of the converter circuit (71).

**5.** Circuit arrangement according to Claim 4, **characterized in that** the storage capacitor (C37) is charged to the voltage of an auxiliary voltage supply (75) via a charging resistor (R37) and is discharged to the potential of the node (731) via a discharge diode (D36).

**6.** Circuit arrangement according to Claim 1, **characterized in that** a storage capacitor (C37) is charged to the voltage of an auxiliary voltage supply (75) via a charging resistor (R37) and is discharged, via a voltage divider (R40, R41) comprising a first resistor (R40) and a second resistor (R41), to a potential correlating to the node (731) via a discharge diode (D36), wherein the potential of the storage capacitor (C37) is input to the control circuit (79) for the purpose of regulating the output voltage of the converter circuit (71).

7. Circuit arrangement according to Claim 6, **characterized in that** a PTC thermistor (R413) is arranged in series with the discharge diode (D36).

8. Circuit arrangement according to Claim 7, **characterized in that** a resistor (R414) is arranged in parallel with the PTC thermistor (R413).

9. Circuit arrangement according to one of the preceding claims, **characterized in that** a Zener diode (D35) is connected between the output of the converter circuit (71, 711) and the control circuit (79) for the purpose of limiting the output voltage of the converter circuit (71, 711) .

10. Circuit arrangement according to Claim 6, **characterized in that** the second resistor (R41) consists of a series circuit comprising a third resistor (R412) and a temperature-dependent resistor.

11. Circuit arrangement according to Claim 10, **characterized in that** the temperature-dependent resistor is a PTC thermistor (R411) .

12. Circuit arrangement according to Claim 4, **characterized in that** the storage capacitor (C37) is coupled to the node (731) in such a manner that it has its potential when the potential of the node (731) is less than that of the storage capacitor (C37).

13. Method for operating a load (5) using a circuit arrangement according to Claim 1, **characterized in that** the clocked converter circuit (71, 711) and the linear regulating circuit (9) are operated in such a manner that the linear regulating circuit (9) can no longer adjust the ripple voltage of the clocked converter circuit (71, 711) when the output voltage ($U_{21}$) is at a minimum, thus resulting in current modulation in the load current through the load (5) .

**Revendications**

1. Ensemble de circuit pour faire fonctionner une charge (5), dans lequel l'ensemble de circuit comprend :

   - une entrée (L, N, PE) pour alimenter une tension alternative d'entrée de réseau,
   - un circuit de redresseur de courant (3),
   - un circuit de convertisseur cadencé (71, 711), qui convertit la tension alternative de réseau d'entrée ($U_E$) redressée par le circuit de redresseur de courant en une tension de sortie ($U_{21}$), dans lequel la tension de sortie ($U_{21}$) comprend une tension ondulée,
   - un circuit de commande (79) pour régler le circuit de convertisseur (71, 711) cadencé,
   - un circuit de mesure (73) qui est couplé au circuit de commande par l'intermédiaire d'un diviseur de tension (R36, R37),

   **caractérisé en ce que** l'ensemble de circuit comprend en outre :

   - un circuit de réglage linéaire (9), qui règle un courant de charge prédéterminé sur la charge (5), dans lequel
   - l'ensemble de circuit est configuré de telle manière que le circuit de convertisseur cadencé (71, 711) et le circuit de réglage linéaire (9) coopèrent de telle sorte que le circuit de réglage linéaire (9) ne peut plus réguler parfaitement la tension ondulée du circuit de convertisseur cadencé (71, 711) au minimum de la tension de sortie ($U_{21}$), ce qui engendre une modulation de courant dans le courant de charge au travers de la charge (5),
   - dans lequel le circuit de commande (79) est configuré à cet effet pour se servir, au moyen du circuit de mesure (73), du potentiel au niveau d'un nœud (731) entre la charge (5) et le circuit de réglage linéaire (9) afin de régler le circuit de convertisseur cadencé (71, 711).

2. Ensemble de circuit selon la revendication 1, **caractérisé en ce que** le circuit de convertisseur est un convertisseur SEPIC (71).

3. Ensemble de circuit selon la revendication 1, **caractérisé en ce que** le circuit de convertisseur est un convertisseur élévateur (711).

4. Ensemble de circuit selon la revendication 1, **caractérisé en ce qu'**un condensateur accumulateur (C37) est couplé au nœud (731) de telle manière qu'il comprend au moins en partie son potentiel, dans lequel l'ensemble de circuit est configuré pour introduire le potentiel du condensateur accumulateur (C37) dans le circuit de commande (79) afin de régler la tension de sortie du circuit de convertisseur (71) .

5. Ensemble de circuit selon la revendication 4, **caractérisé en ce que** le condensateur accumulateur (C37) est chargé à la tension d'une alimentation de tension auxiliaire (75) par l'intermédiaire d'une résistance de charge (R37), et est déchargé au potentiel du nœud (731) via une diode de décharge (D36).

6. Ensemble de circuit selon la revendication 1, **caractérisé en ce qu'**un condensateur accumulateur (C37) est chargé à la tension d'une alimentation de tension auxiliaire (75) via une résistance de charge (R37), et, via un diviseur de tension (R40, R41) constitué d'une première (R40) et d'une seconde (R41) résistances, est déchargé à un potentiel corrélé avec le nœud (731) via une diode de décharge (D36), dans lequel le potentiel du condensateur accumulateur (C37) est introduit dans le circuit de commande (79) pour régler la tension de sortie du circuit de convertisseur (71).

7. Ensemble de circuit selon la revendication 6, **caractérisé en ce qu'**une résistance à CTP (R413) est montée en série avec la diode de décharge (D36).

8. Ensemble de circuit selon la revendication 7, **caractérisé en ce qu'**une résistance (R414) est montée en parallèle à la résistance à CTP (R413).

9. Ensemble de circuit selon l'une des revendications précédentes, **caractérisé en ce que**, pour limiter la tension de sortie du circuit de convertisseur (71, 711), une diode Zener (D35) est connectée entre la sortie du circuit de convertisseur (71, 711) et le circuit de commande (79).

10. Ensemble de circuit selon la revendication 6, **caractérisé en ce que** la seconde résistance (R41) est constituée d'un montage en série composé d'une troisième résistance (R412) et d'une résistance variant en fonction de la température.

11. Ensemble de circuit selon la revendication 10, **caractérisé en ce que** la résistance variant en fonction de la température est une résistance à CTP (R411).

12. Ensemble de circuit selon la revendication 4, **caractérisé en ce que** le condensateur accumulateur (C37) est couplé au nœud (731) de telle manière qu'il a son potentiel lorsque le potentiel du nœud (731) est inférieur à celui du condensateur accumulateur (C37).

13. Procédé pour faire fonctionner une charge (5), avec un ensemble de circuit selon la revendication 1, **caractérisé en ce que** le circuit de convertisseur cadencé (71, 711) et le circuit de réglage linéaire (9) sont mis en action de telle manière que le circuit de réglage linéaire (9) ne peut plus réguler parfaitement la tension ondulée du circuit de convertisseur cadencé (71, 711) au minimum de la tension de sortie ($U_{21}$), ce qui engendre une modulation de courant dans le courant de charge au travers de la charge (5).

Fig. 1

Fig. 2

EP 3 123 822 B1

14

Fig. 3

EP 3 123 822 B1

15

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- WO 2013160462 A1
- EP 2315497 A1
- CN 103648204 A
- US 2012081016 A1
- DE 102004016944 A1